# EUROPEAN PATENT APPLICATION

(11) **EP 2 963 315 A1**
(43) Date of publication of application: **06.01.2016**
(21) Application number: 14756315.9
(22) Date of filing: 18.02.2014
(51) Int. Cl.: F16H 61/08, F16H 3/089, F16H 61/684

(54) **VEHICLE TRANSMISSION**

(30) Priority: 26.02.2013 JP 2013035317
(71) Applicant: Aisin AI Co., Ltd., Nishio-shi, Aichi 445-0006 (JP)
(72) Inventor: MASUI Yuuki, Nishio-shi Aichi 445-0006 (JP)
(74) Representative: TBK
(86) International application number: PCT/JP2014/053728
(87) International publication number: WO 2014/132838

(57) **Abstract**

A power transmission mechanism interposed between an input shaft and an output shaft for transmitting torque of the input shaft to the output shaft, and the power transmission mechanism including gear mechanisms corresponding to each of gear stages respectively. A control device controls the power transmission mechanism to realize one of a first control mode, a second control mode and a third control mode selectively. The first control mode is a mode in which when a first gear stage of the gear stages is selected, the power transmission mechanism transmits the torque of the input shaft to the output shaft via only a first gear mechanism corresponding to the first gear stage. The second control mode is a mode in which when a second gear stage of the gear stages is selected, the power transmission mechanism transmits the torque of the input shaft to the output shaft via only a second gear mechanism corresponding to the second gear stage. The third control mode is a mode in which at the time of gear-shift from the first gear stage to the second gear stage, the power transmission mechanism circulates torque having a prescribed amount to the input shaft from the output shaft via the first gear mechanism while transmitting the torque of the input shaft to the output shaft. Thus, it becomes possible to reduce torque changed shock at the time of gear-shift in a transmission for vehicle which shifts gears between a first gear stage and a second gear stage.

## Description

### [Technical Field]

The present invention relates to a transmission for a vehicle.

### [Background Art]

An example of a transmission for a vehicle is disclosed in Japanese Unexamined Patent Application Publication (Translation of PCTApplication) No. 2010-510464. One engaging member (an engagement element set) and the other engaging member (an engagement element set) are provided in this transmission. The one engaging member is engageable with a first engaged member (driving structure) which is provided on/for a low speed gear, while the other engaging member is engageable with a second engaged member (driving structure) which is provided on/for a high speed gear. Each of these two engaging members (engaging element sets) is configured to be driven independently in the axial direction by a drive member and an actuator which are dedicated for each of the engaging members. According to this configuration, it is possible to shift a gear position (or a speed gear stage) from a low speed gear stage where the one engaging member engages with the first engaged member to a high speed gear stage where the other engaging member engages with the second engaged member (in the other words, it is possible to carry out an acceleration shift) in a moment by controlling movement of each of the engaged members with the actuator, so that a seamless change of a driving torque or so-called a "seamless shift" can be realized.

### [Summary of Invention]

In the meanwhile, in the transmission as described in the Japanese Unexamined Patent Application Publication (Translation of PCT Application) No. 2010-510464, so-called a "double engagement state" temporarily occurs where the one engaging member is engaged with the first engaged member and the other engaging member is engaged with the second engaged member. When the double engagement state occurs, an excessively large shock wave which an occupant can recognize is generated due to a collision between input side inertia and output side inertia. In this case, there arises a concern that the shock wave gives an uncomfortable feeling/sensation to the occupant in a vehicle which is running. Therefore, in this kind of transmission, in order to cope with such a problem, means for reducing the shift shock of a torque at the time of the gear-shift is required.

The present invention has been made in view of the above point, and has an object to provide an effective technique to reduce the shift shock of a torque at the time of the gear-shift in a transmission for a vehicle which changes the gear position (or the speed gear stage) between a first gear stage and a second gear stage.

To achieve this object, a transmission for a vehicle according to the present invention is interposed in a power transmission system which connects a drive output shaft of a driving source of the vehicle and drive wheels of the vehicle. The transmission for a vehicle selectively realizes at least one of gear stages, and is provided with an input shaft, an output shaft, a power transmission mechanism, and a control device.

The input shaft is a shaft which forms a power transmission system between the drive output shaft and the input shaft. The output shaft is a shaft which forms a power transmission system between the drive wheels and the output shaft. The power transmission mechanism is interposed between the input shaft and the output shaft for transmitting torque of the input shaft to the output shaft, and includes gear mechanisms, each corresponding to each of the gear stages respectively. The control device controls the power transmission mechanism to selectively realize one of a first control mode, a second control mode, and a third control mode. In the first control mode, when a first gear stage of the gear stages is selected, the power transmission mechanism transmits the torque of the input shaft to the output shaft via only a first gear mechanism corresponding to the first gear stage. In the second control mode, when a second gear stage of the gear stages is selected, the power transmission mechanism transmits the torque of the input shaft to the output shaft via only a second gear mechanism corresponding to the second gear stage. In the third control mode, at the time of (during) gear-shift from the first gear stage to the second gear stage, the power transmission mechanism circulates torque having a prescribed amount to the input shaft from the output shaft via the first gear mechanism while transmitting the torque of the input shaft to the output shaft via the second gear mechanism. In this case, the first gear stage and the second gear stage can be gear stages which are mutually contiguous or can be gear stages which are mutually discontinuous. The second gear stage can be a higher-speed gear stage than the first gear stage, or the first gear stage can be a higher-speed gear stage than the second gear stage. According to the thus configured transmission for a vehicle, when shifting gear stages from the first gear stage to the second gear stage, it is possible to generate a circulation torque, which cancels a shock torque produced in the second gear mechanism, in the first gear mechanism by controlling the power transmission mechanism under the third control mode using the control device. Thus, it is possible to reduce torque changed shock at the time of the gear-shift.

The transmission for a vehicle according to another embodiment of the present invention, the transmission for vehicle preferably comprises a drive unit which is connected to and rotates one of the input shaft and the output shaft. The first gear mechanism preferably comprises a first fixed gear, a first idler gear, and a first clutch member. The second gear mechanism preferably comprises a second fixed gear, a second idler gear, and a second clutch member. The first fixed gear is provided coaxially and relatively irrotatably to/on one of the input shaft and the output shaft. The first idler gear is provided coaxially and relatively rotatably to/on the other of the input shaft and the output shaft, and is constantly meshed with the first fixed gear. The first clutch member is coaxially provided to/on the shaft to/on which the first idler gear is provided, and is movable in the axial direction of the shaft to/on which the first idler gear is provided between a non-engaged position where the first clutch member is disengaged with the first idler gear and an engaged position where the first clutch member is engaged with the first idler gear. Likewise, the second fixed gear is provided coaxially and relatively irrotatably to/on one of the input shaft and the output shaft. The second idler gear is provided coaxially and relatively rotatably to/on the other of the input shaft and the output shaft, and is constantly meshed with the second fixed gear. The second clutch member is provided coaxially provided to/on the shaft to/on which the second idler gear is provided, and is movable in the axial direction of the shaft to/on which the second idler gear is provided between a non-engaged position where the second clutch member is disengaged with the second idler gear and an engaged position where the second clutch member is engaged with the second idler gear. In this case, the control device controls the first clutch member to be set at the engaged position thereof, and controls the second clutch member to be set at the non-engaged position thereof, in the first control mode. The control device controls the first clutch member to be set at the non-engaged position thereof, and controls the second clutch member to be set at the engaged position thereof, in the second control mode. Furthermore, the control device controls both the first clutch member and the second clutch member so that the first clutch member is set at the engaged position thereof and the second clutch member is set at the engaged position thereof, and controls the drive unit so that the torque having the prescribed amount is circulated to the input shaft from the output shaft, in the third control mode. Thus, it is possible to reduce the torque changed shock at the time of the gear-shift by controlling the drive unit.

The transmission for a vehicle according to yet another embodiment of this invention, it is preferable that the control device control a moving speed for driving the first clutch member from the engaged position thereof to the non-engaged position thereof so that the torque having the prescribed amount is circulated from the output shaft to the input shaft, after the control device controls both the first clutch member and the second clutch member to be set at the respective engaged positions, in the third control mode. Thus, it is possible to reduce the torque changed shock at the time of the gear-shift by controlling the moving speed of the first clutch member.

The transmission for a vehicle according to yet another embodiment of this invention, it is preferable that the control device determine/calculate the prescribed amount of the torque based on a rotational speed of the output shaft and a rotational speed of the input shaft, and control the drive unit or the first clutch member so as to circulate the torque having the prescribed amount to the input shaft from the output shaft, in the third control mode. Thus, it is possible to generate the circulation torque corresponding to each of the rotational speeds of the output shaft and the input shaft.

As described above, according to the present invention, it becomes possible to reduce the torque changed shock at the time of the gear-shift in a transmission for a vehicle which shifts gears between a first gear stage and a second gear stage.

### [Brief Description of Drawings]

FIG.1 is a view showing schematic structure of a transmission T/M according to an embodiment of the present invention.
FIG.2 is a view schematically showing the structure of a power transmission mechanism 101 shown in FIG. 1.
FIG.3 is a view schematically showing a state of the power transmission mechanism 101 when the gear stage of the transmission T/M is in the first gear stage.
FIG.4 is a view schematically showing a state of the power transmission mechanism 101 in the process of the transmission T/M while the gear stage of the transmission T/M is being changed from the first gear stage to the second gear stage.
FIG. 5 is a view showing a torque changed shock at the time of gear-shift from the first-speed driven gear to the second-speed driven gear.
FIG. 6 is a view showing a flowchart of a gear-shift control.
FIG.7 is a view schematically showing a state of the power transmission mechanism 101 after the gear stage of the transmission T/M is changed from the first gear stage to the second gear stage.
FIG. 8 is a view showing a flowchart of a gear-shift control of another embodiment according to the present invention.

### [Description of Embodiments]

An embodiment of a transmission for a vehicle according to the present invention will be described hereinafter with reference to the accompanying drawings. The transmission T/M (for a vehicle) of the embodiment according to the present invention is interposed in a power transmission system connecting a drive output shaft of an engine serving as a driving source of the vehicle and the drive wheels of the vehicle. The transmission T/M is provided with five gear stages for driving the vehicle forward (first-speed driven gear (1st) ∼ fifth-speed driven gear (5th)) and a single gear stage (reverse gear) for driving the vehicle backward.

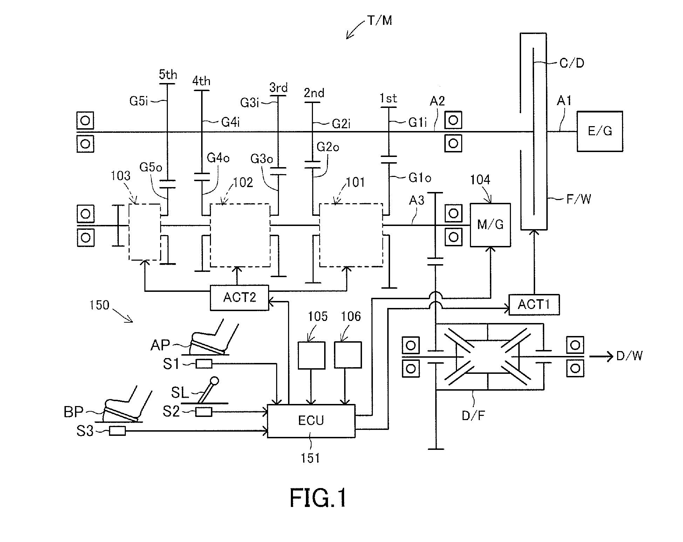

As shown in FIG. 1, the transmission T/M comprises an input shaft A2 and an output shaft A3. The input shaft A2 of the transmission T/M is connected to a drive output shaft A1 of the engine E/G via a clutch C/D and a flywheel F/W. A power transmission system is formed between the input shaft A2 and the drive output shaft A1 of the engine E/G. The output shaft A3 of the transmission T/M is connected to the drive wheels D/W of the vehicle via a differential D/F. A power transmission system is formed between the output shaft A3 and the drive wheels D/W. The input shaft A2 and the output shaft A3 correspond to an "input shaft" and an "output shaft" of the present invention, respectively. Further, a drive unit 104 for rotating the output shaft A3 is connected to the output shaft A3. The drive unit 104 is typically composed of a motor-generator. The drive unit 104 corresponds to a "drive unit" of the present invention.

The clutch C/D is a friction clutch disc having one of well-known structures and is provided on the input shaft A2 of the transmission T/M so that the clutch C/D rotates together with the input shaft A2. More specifically, the clutch C/D (more precisely, a clutch disk) and the flywheel F/W are disposed so that the clutch C/D and the flywheel F/W coaxially face each other. The flywheel F/W is provided on the output shaft A1 of the engine E/G so as to rotate together with the output shaft A1. An axial position of the clutch C/D (more precisely, the clutch disk) with respect to the flywheel F/W is adjustable. The axial position of the clutch C/D is adjusted by a clutch actuator ACT1. It should be noted that the clutch C/D is not provided with a clutch pedal operated by a driver.

The transmission T/M comprises a plurality of fixed gears (also referred to as "driving gears") G1i, G2i, G3i, G4i, G5i, and a plurality of idler gears (also referred to as "driven gears") G1o, G2o, G3o, G4o, G5o. Each of a plurality of the fixed gears G1i, G2i, G3i, G4i, G5i is coaxially fixed to the input shaft A2. Each of the fixed gears G1i, G2i, G3i, G4i, G5i is not rotatable with respect to the input shaft A2, and is immovable with respect to the input shaft A2 in the axial direction of the input shaft A2. Each of the fixed gears G1i, G2i, G3i, G4i, G5i corresponds to each of gear stages for driving the vehicle forward. Specifically, the fixed gears G1i, G2i, G3i, G4i, G5i correspond to a first-speed driven gear, a second-speed driven gear, a third-speed driven gear, a fourth-speed driven gear, and a fifth-speed driven gear, respectively. Each of a plurality of the idler gears G1o, G2o, G3o, G4o, G5o is coaxially and rotatably provided on (fixed to) the output shaft A3. Each of the idler gears G1o, G2o, G3o, G4o, G5o corresponds to each of the gear stages for driving the vehicle forward, and is constantly engaged (meshes) with each of the corresponding fixed gears. Specifically, the idler gears G1o, G2o, G3o, G4o, G5o correspond to the first-speed driven gear, the second-speed driven gear, the third-speed driven gear, the fourth-speed driven gear, and the fifth-speed driven gear, respectively.

The transmission T/M includes power transmission mechanisms 101, 102, 103. Changing and setting the gear stage of the transmission T/M are performed by actuating the respective power transmission mechanisms 101, 102, 103 with a transmission actuator ACT2. A gear reduction ratio (a ratio of a rotational speed of the input shaft A2 to a rotational speed of the output shaft A3) is adjusted by changing the gear stage.

A controller 150 comprises an accelerator position sensor S1, a shift position sensor S2, a brake sensor S3, a rotation speed sensor 105, a clutch member sensor 106, and an electronic control unit (ECU) 151. The accelerator position sensor S1 is a sensor that detects an operation amount (accelerator position) of an accelerator pedal AP. The shift position sensor S2 is a sensor that detects a position of a shift lever SF. The brake sensor S3 is a sensor that detects the presence or absence of an operation of a brake pedal BP. The rotation speed sensor 105 has a function to detect the rotational speed of the input shaft A2 and the rotational speed of the output shaft A3. The clutch member sensor 106 has a function to detect the respective positions of a first clutch member 130 and a second clutch member 230, which will be described later. The electronic control unit 151 controls a clutch stroke (hence, a clutch torque) of the clutch C/D and the gear stage of the transmission T/M by controlling the actuators ACT1, ACT2 described above, based on information and the like from the sensors S1-S3 described above, and another sensors. The electronic control unit 151 further controls the driving unit 104 based on information detected by the rotational speed sensor 105. Furthermore, the electronic control unit 151 controls a drive torque of the output shaftA1 of the engine E/G by controlling a fuel injection quantity of the engine E/G (an opening degree of the throttle valve).

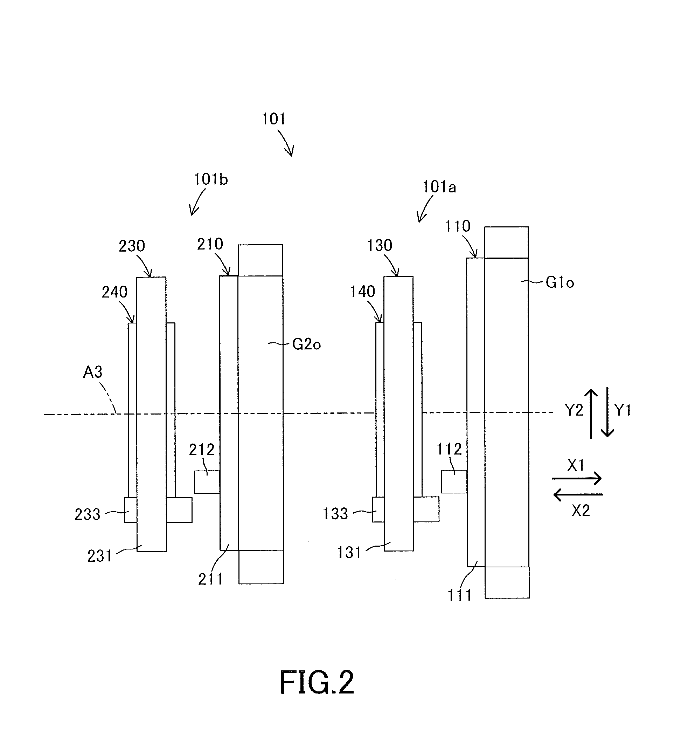

The above described power transmission mechanisms 101, 102, 103 have a structure similar to each other, and thus, only the structure of the power transmission mechanism 101 will next be described with reference to FIGS. 2-4. The power transmission mechanisms 101, 102, 103 correspond to a "power transmission mechanism" of the present invention.

The power transmission mechanism 101 corresponds to the first-speed driven gear and the second-speed driven gear. The first-speed driven gear (a first gear stage) is relatively lower speed gear among the gear stages, and the second-speed driven gear (a second gear stage) is a speed gear higher than the first-speed driven gear. The power transmission mechanism 101 includes a first gear mechanism 101a and a second gear mechanism 101b, which are provided on the output shaft A3 of the transmission T/M, respectively. Each of the first gear mechanism 101 a and the second gear mechanism 101b is one of gear mechanisms which respectively correspond to the gear stages of the power transmission mechanism 101. Both the first gear mechanism 101 a and the second gear mechanism 101 b are interposed between the input shaft A2 and the output shaft A3. The first gear mechanism 101 a corresponds to one of the "first gear mechanism" and the "second gear mechanism" of the present invention, the second gear mechanism 101 b corresponds to the other of the "first gear mechanism" and the "second gear mechanism" of the present invention.

As shown in FIG. 2, the first gear mechanism 101 a includes the first idler gear G1o, the first clutch member 130, and a first hub member 140, which are coaxial with the output shaft A3, and each of which has an annular shape. Similarly, the second gear mechanism 101 b includes the second idler gear G2o, the second clutch member 230, and a second hub member 240, which are coaxial with the output shaft A3, and each of which has an annular shape. Between the first idler gear G1o and the second clutch member 230, in order from the first idler gear G1o side, the first clutch member 130 and the second idler gear G2o are arranged. It should be noted that, in those drawings and the other drawings, the arrows X1 indicate the one of the axial directions of the output shaft A3, the arrows X2 indicate the opposite direction to the arrows X1. Further, the arrows Y1 indicate one of the circumferential directions (rotational directions) of the output shaft A3, the arrows Y2 indicate the opposite direction to the arrows Y1.

Both the idler gears G1o and G2o are prevented from moving in the axial directions X1, X2 of the output shaft A3 by fixing means such as snap rings, and are relatively rotatable in the rotational directions Y1, Y2 with respect to the output shaft A3. The first idler gear G1o includes a facing portion 110 which faces the first clutch member 130. This facing portion 110 is provided with a cylindrical main body portion 111, and engagement pieces 112 are provided on the outer peripheral surface of the cylindrical main body portion 111. The engagement pieces 112 are arranged at equal intervals in the circumferential direction of the main body 111. Similarly to the first idler gear G1o, the second idler gear G2o includes a facing portion 210 which faces the second clutch member 230. This facing portion 210 is provided with a cylindrical main body portion 211, and engagement pieces 212 are provided on the outer peripheral surface of the cylindrical main body portion 211. The engagement pieces 212 are arranged at equal intervals in the circumferential direction of the main body 211.

The first clutch member 130 configures a clutch for transmission and interruption of torque in the first gear mechanism 101 a. The hub member 140 is irrotatably provided on the output shaft A3. The first clutch member 130 is movable with respect to the hub member 140 in the axial directions X1, X2 of the output shaft A3. The first clutch member 130 is provided with a cylindrical body portion 131 and engagement pieces 133 provided on the body portion 131. The first clutch member 130 is driven in the axial direction X1 from the non-engaged position shown in FIG. 2 to the engaged position with respect to the facing portion 110 of the first idler gear G1o by a transmission actuator ACT2 and a fork (not shown) controlled with the above described electronic control unit 151. At the engaged position of the first clutch member 130, an engagement state where the engaging pieces 133 of the first clutch member 130 and the engaging pieces 112, which correspond to the engaging pieces 133, of the first idler gear G1o are engaged with each other is formed. On the other hand, at the non-engaged position (disengaged position) of the first clutch member 130, the engagement state between the engaging pieces 133 of the first clutch member 130 and the engaging pieces 112, which correspond to the engaging pieces 133, of the first idler gear G1o is released/cancelled. In this case, the clutch member sensor 106 detects both a state where the first clutch member 130 is at the non-engaged position and a state where the first clutch member 130 is at the engaged position.

Similarly to the first clutch member 130, the second clutch member 230 configures a clutch for transmission and interruption of torque in the second gear mechanism 101 b. The hub member 240 is irrotatably provided on the output shaft A3. The second clutch member 230 is movable with respect to the hub member 240 in the axial directions X1, X2 of the output shaft A3. The second clutch member 230 is provided with the cylindrical main body portion 231, and engagement pieces 233 provided on the main body portion 231. The second clutch member 230 is driven in the axial direction X1 from the non-engaged position shown in FIG. 2 to the engaged position with respect to the facing portion 210 of the second idler gear G2o by the transmission actuator ACT2 and the fork (not shown) controlled with the above described electronic control unit 151. At the engaged position of the second clutch member 230, an engagement state where the engaging pieces 233 of the second clutch member 230 and the engaging pieces 212, which correspond to the engaging pieces 233, of the second idler gear G2o are engaged with each other is formed. On the other hand, at the non-engaged position (disengaged position) of the second clutch member 230, the engagement state between the engaging pieces 233 of the second clutch member 230 and the corresponding engaging pieces 212, which correspond to the engaging pieces 233, of the second idler gear G2o is released/canceled. In this case, the clutch member sensor 106 detects both a state where the second clutch member 230 is at the non-engaged position and a state where the second clutch member 230 is at the engaged position.

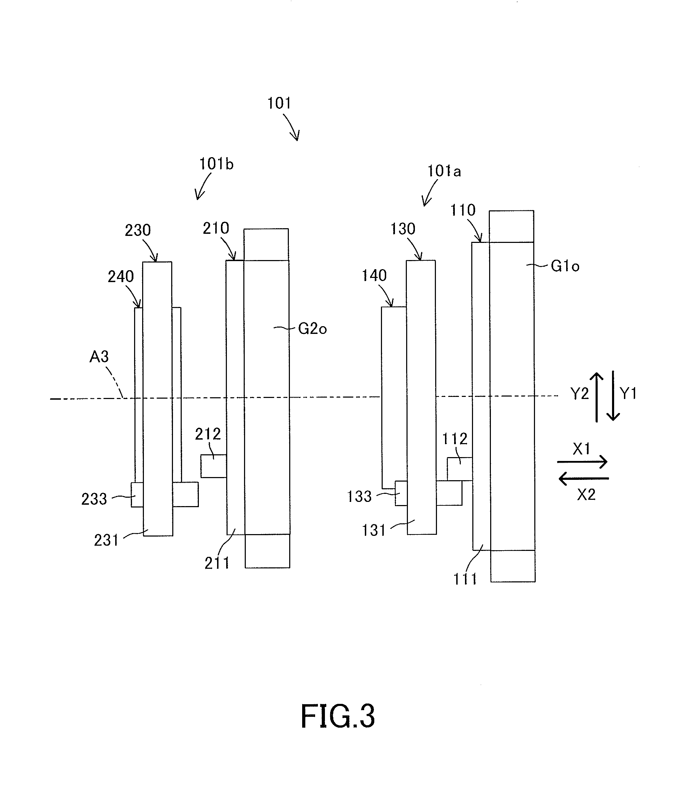

A control mode/operation of the thus configured power transmission mechanism 101, particularly a control mode/operation where the gear stage of the transmission T/M is changed from the first gear stage to the second gear stage will be described hereinafter with reference to FIGS.3 - 7. The electronic control unit 151 of the controller 150 controls the transmission actuator ACT2 and the drive unit 104 so that this control is performed/realized. Thus, the power transmission mechanism 101 selectively realizes at least one of a low-speed mode, a high-speed mode, and a middle mode, which are described later. In this case, the "control device" of the present invention is configured by the control unit 150 including the electronic control unit 151. It should be noted that, in those figures, the direction of rotation indicated by the arrow Y1 is defined as an acceleration direction, and the direction of rotation indicated by the arrow Y2 is defined as a deceleration direction.

### (Low-speed mode)

In the low-speed mode shown in FIG. 3, the transmission T/M is set at the first gear stage. Namely, the first clutch member 130 is set at the engaged position in the first gear mechanism 101 a, and the first clutch member 230 is set at the non-engaged position in the second gear mechanism 101b, by controlling the transmission actuator ACT2 with the electronic control unit 151 of the control device 150. In this case, the engaging pieces 133 of the first clutch member 130 and the engagement pieces 112 of the first idler gear G1o are engaged with each other, while the second engagement pieces 233 of the second clutch member 230 and the engaging pieces 212 of the second idler gear G2o are not engaged with each other. Accordingly, the torque of the input shaft A2 is transmitted to the output shaft A3 via the first gear mechanism 101 a only, namely via the first fixed gear G1i, the first idler gear G1o, the first clutch member 130, and the first hub member 140. When the first idler gear G1o is rotated in the acceleration direction Y1, the first clutch member 130 is also rotated in the acceleration direction Y1, so that a first torque T1 corresponding to the first gear stage acts on the first clutch member 130. On the other hand, when the second idler gear G2o is rotated in the acceleration direction Y1, the second clutch member 230 is not rotated. For example, when the first idler gear G1o rotates in the acceleration direction Y1 at a predetermined rotational speed (also referred to as an "angular velocity") w, and the second idler gear G2o rotates in the acceleration direction Y1 at a rotation speed 2ω which is two times as fast as the rotational speed w, the first clutch member 130 rotates in the acceleration direction Y1 at the rotational speed w same as the rotational speed of the first idler gear G1o. In this case, the rotational torque of the input shaft A2 is transmitted to the output shaft A3 via the first idler gear G1o only, and a power transmission system having a reduction ratio of the first-speed driven gear is formed. This low-speed mode corresponds to the "first control mode" of the present invention.

### (Intermediate mode)

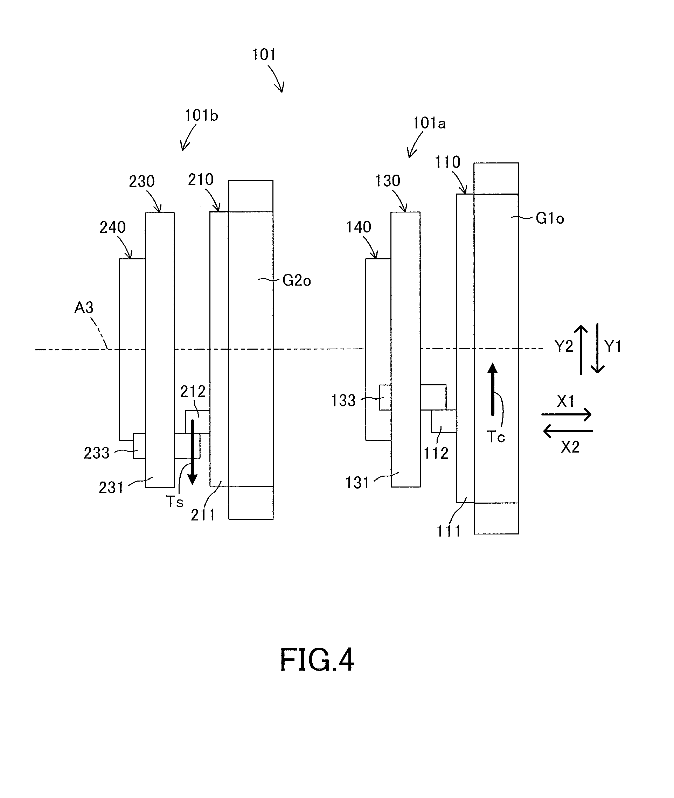

In the course (transition state) of transmitting the gear stage of the transmission T/M from the first gear stage to the second gear stage, the intermediate mode is formed. In the intermediate mode, the second clutch member 230 is driven in the axial direction X1 from the non-engaged position (showed in FIG. 3) in the second gear mechanism 101 b by controlling the transmission actuator ACT2 with the electronic control unit 151 of the control device 150, so that the second clutch member 230 is set at the engaged position shown in FIG.4. Thus, the engagement pieces 233 of the second clutch member 230 and the engaging pieces 212 of the second idler gear G2o engage with each other. On the other hand, the state where the engaging pieces 133 of the first clutch member 130 and the engagement pieces 112 of the first idle gear G1o are engaged with each other is maintained in the first gear mechanism 101 a. Namely, in this intermediate mode, both a state where the first clutch member 130 and the first idler gear G1o are meshed with each other and a state where the second clutch member 230 and the second idler gear G2o are meshed with each other occur simultaneously. In other words, so-called "double engagement state" (also referred to as a "double meshing state") occurs. Accordingly, in the intermediate mode, the torque of the input shaft A2 is transmitted to the output shaft A3 via the second fixed gear G2i, the second idler gear G2o, the second clutch member 230, and the second hub member 240 of the second gear mechanism 101 b, while the torque is circulated to the input shaft A2 from the output shaft A3 via the first gear mechanism 101 a. This intermediate mode corresponds to a "third control mode" of the present invention.

In the intermediate mode, as a result of the engagement of the second clutch member 230 and the second idler gear G2o, the rotational speed of the second clutch member 230 and the second idler gear G2o halve to ω from 2ω. At this time, a shock torque Ts (also referred to as a "shift shock"), which is generated at the time of gear-shift from the first-speed driven gear to the second-speed driven gear, acts on the second clutch member 230. Further, the rotation of the two idler gear G2o is transmitted to the first idler gear G1o via the fixed gear G2i, the input shaft A2, and the fixed gear G1i, whereby the rotational speed of the first idler gear G1o halve from ω to (1/2) ω. At this time, in the first gear mechanism 101a, it is possible to circulate a torque having a predetermined amount to the input shaft A2 by maintaining the first clutch member 130 at the engaged position. This torque becomes circulating torque Tc (also referred to as a "resistance torque" against the input) to cancel a part of the shock torque Ts.

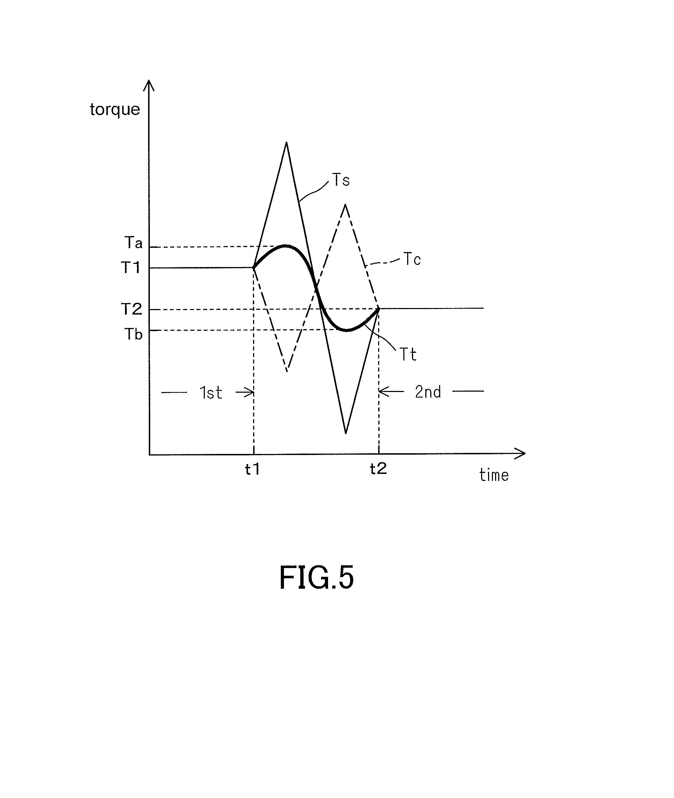

When the above double engagement state occurs, an excessively large shock wave which an occupant can recognize is generated due to a collision of the inertia of the input side and the inertia of the output side. As shown in FIG.5, between time t1 at which the first torque T1 corresponding to the first gear stage is produced and time t2 at which the second torque T2 corresponding to the second gear stage is produced, the above described shock torque Ts is generated. In this case, there arises a concern that the shock wave gives an unpleasant feeling/sensation to the occupant in the moving/running vehicle. Therefore, means for reducing a shock in the torque at the time of gear-shift is required to cope with such a problem.

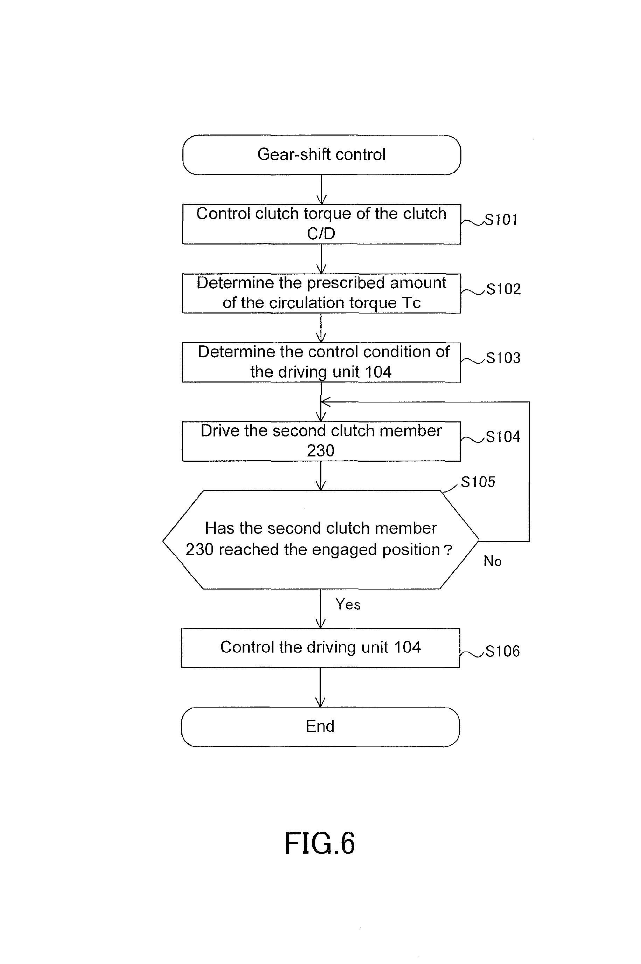

In view of the above, in the present embodiment, the electronic control unit 151 carries out the gear-shift control shown in FIG. 6 in the intermediate mode. At step S101, a control signal is output to the clutch actuator ACT1 to match a clutch torque of the clutch C/D with an engine torque of the engine E/G in response to an instruction of the gear-shift. Thus, an input of the engine inertia after the gear-shift can be prevented. At step S102 following step S101, the prescribed amount (necessary amount) of the circulation torque Tc, which is needed to reduce the shock torque Ts, is calculated. In this case, the prescribed amount of the circulating torque Tc is calculated based on the rotational speeds of the input shaft A2 and the output shaft A3, which are respectively detected by the rotational speed sensor 105. At step S103, a control condition (typically, a magnitude and a phase (frequency) of an output torque applied to the output shaft A3 from the driving unit 104) of the drive unit 104, the condition being necessary for generating the circulation torque Tc having the prescribed amount, is determined. Thus, a preparation for the control of the driving unit 104 is completed. At step S104 following step S103, a control signal is outputted to the transmission actuator ACT2 to set the second clutch member 230 to the engaged position shown in FIG.4 from the non-engaged position shown in FIG.3. Thus, the second clutch member 230 is driven to the engaged position. At step S105, whether or not the second clutch member 230 actually has reached the engaged position is determined owing to the control at step S104, based on the information detected by the clutch member sensor 106. If the condition of step S105 is met, in other words, when the second clutch member 230 actually has reached the engaged position, the ECU proceeds to step S106. On the other hand, when the condition of step S105 is not met, in other words, when the second clutch member 230 has not actually reached the engaged position, the ECU returns to step S104. At step S106, the drive unit 104 is controlled based on the control condition determined at step S103, so that the circulation torque Tc having a waveform whose phase is opposite to the shock torque Ts is outputted to the output shaft A3. At this time, it is preferable to output a control signal to the clutch actuator ACT1, the control signal being for increasing clutch torque of the clutch C/D so that the rotational speed of the engine E/G matches with the rotational speed of the input shaft A2. The gear-shift process is completed after the execution of step S106. The order of the processes at steps S101-S106 described above is not limited to the order shown in FIG. 6, but the order can be changed as necessary.

According to the above gear-shift control shown in FIG.6, it is possible to generate the circulation torque Tc having the prescribed amount for canceling the shock torque Ts by controlling the magnitude and phase of the output torque applied to the output shaft A3 from the driving unit 104, whereby it is possible to diminish a part of the shock torque Ts by the circulation torque Tc. As a result, the shift shock caused by the gear-shift from the first gear stage to the second gear stage can be reduced, because the combined torque (combined torque Tt shown in FIG.5 (torque fluctuating between torque Ta and torque Tb)) which is smaller in torque variation compared with the shock torque Ts is generated. In particular, the reduction of the shift shock can easily be achieved by using the control of the drive unit 104. Likewise, the second gear mechanism 101 b described above can reduce the shift shock caused by the gear-shift from the second gear stage to the first gear stage by using the control of the drive unit 104.

### (High-speed mode)

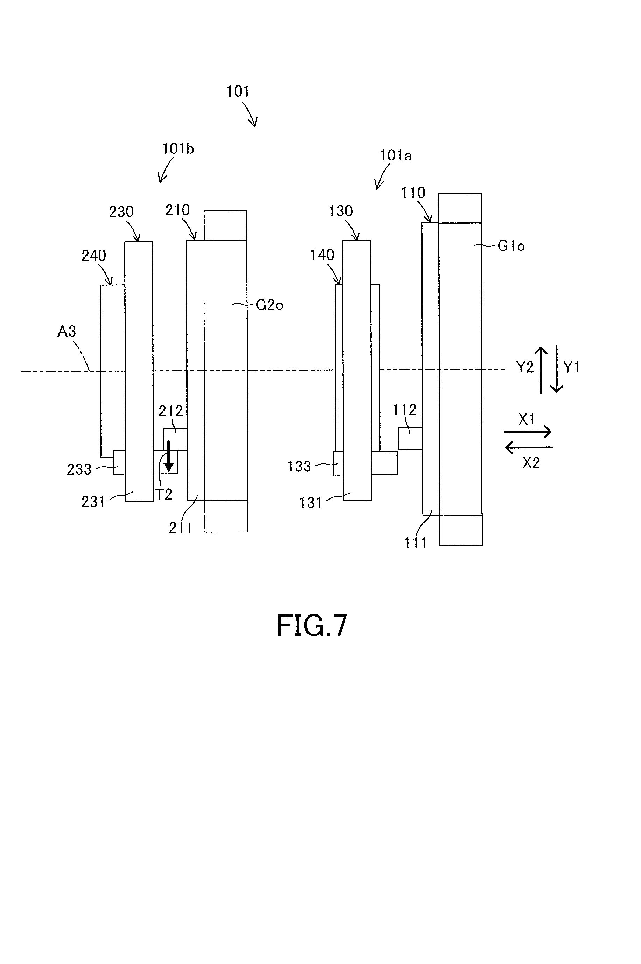

In the high-speed mode shown in FIG. 7, the first clutch member 130 is set at the non-engaged position, and second clutch member 230 is maintained at the engaged position, by controlling the transmission actuator ACT2 with the electronic control unit 151 of the control unit 150. Thus, the engagement between the engaging pieces 133 of the first clutch member 130 and engaging pieces 112 of the first one idler gear G1o is completely released. Accordingly, the torque of the input shaft A2 is transmitted to the output shaft A3 via the second gear mechanism 101 b only, in other words, via the second fixed gear G2i, the first idler gear G2o, the second clutch member 230, and the second hub member 240. When the second idler gear G2o is rotated in the acceleration direction Y1, the second clutch member 230 is also rotated in the acceleration direction Y1, so that the second torque T2 corresponding to the second gear stage acts on the second clutch member 230. On the other hand, when the first idler gear G1o is rotated in the acceleration direction Y1, the first clutch member 130 is not rotated. In this case, the rotation of the input shaft A2 is transmitted to the output shaft A3 via the second idler gear G2o only, so that a power transmission system having a second speed reduction ratio is formed. This high-speed mode corresponds to the "second control mode" of the present invention. As described above, it becomes possible to shift the gear stage from the first gear stage to the second gear stage (acceleration shift) instantaneously, whereby the seamless shift in which the drive torque is not interrupted can be realized.

Although not shown, as for a change of the gear stage from the second gear stage to the first gear stage (deceleration shift), the seamless shift similar to the change of gear stage from the first gear stage to the second gear stage (acceleration shift) is realized by carrying out in a substantively opposed manner to the above control mode shown in FIG. 3, 4, and 7.

The present invention is not limited to the typical embodiment described above, but also various applications and modifications can be made. For example, it is possible to execute each of the following embodiments obtained by modifying the above-mentioned embodiment.

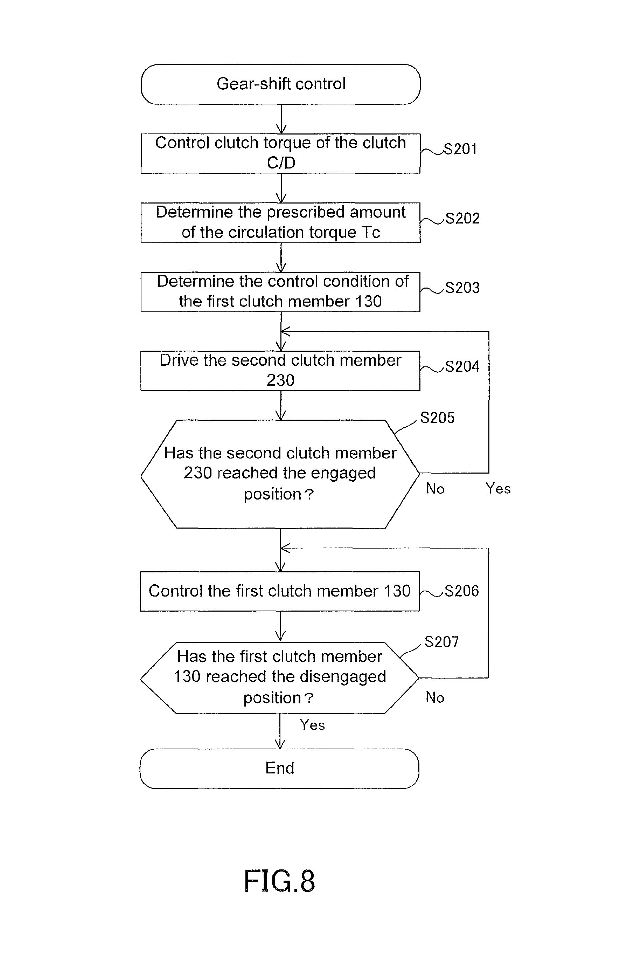

In the above embodiment, as the gear-shift control for adjusting the torque circulated to the input shaft A2 from the output shaft A3 at the time of gear-shift from the first gear stage to the second gear stage, the control by the drive unit 104 shown in FIG. 7 has been described. However, in the present invention it is possible to adopt a modified embodiment in which the torque circulated to the input shaft A2 from the output shaft A3 is adjusted by a control of a control object other than the drive unit 104. This modified embodiment is shown in FIG.8.

According to the gear-shift control shown in FIG.8, a process similar to step S101 showin in FIG. 6 is performed at step S201, and further, a process similar to step S102 shown in FIG.6 is performed at step S202. At step S203, a control condition (typically, a moving speed for driving the first clutch member 130 from the engaged position to the non-engaged position) of the first clutch member 130 is determined, the control condition being needed to generate the circulation torque Tc having the prescribed amount calculated at step S202. Thus, the preparation for the control of the first clutch member 130 is completed. At step S204 and step S205, processes similar to step S104 and step S105 shown in FIG. 6 are performed. At step S206, the first clutch member 130 is controlled based on the control condition determined at step S203. Thus, the first clutch member 130 moves from the engaged position to the non-engaged position at the moving speed determined at step S203. At step S207, whether or not the first clutch member 130 actually has reached the non-engaged position is determined owing to the control of step S206, based on the information detected by the clutch member sensor 106. When the condition of step S207 is met, in other words, when the first clutch member 130 actually has reached the non-engaged position, this gear-shift process is completed. On the other hand, when the condition of step S207 is not met, in other words, when the first clutch member 130 has not actually reached the non-engaged position, the ECU returns to step S206. It should be noted that the control described above the order of the processes at steps S201-S207 described above is not limited to the order shown in FIG. 8, but the order can be changed as necessary.

According to the above gear-shift control shown in FIG. 8, it is possible to generate the circulation torque Tc having the prescribed amount for canceling shock torque Ts by controlling the moving speed of the first clutch member 130 while it moves from the engaged position to the non- engaged position, and therefore, it is possible to diminish a part of the shock torque Ts by the circulation torque Tc, similarly to the case where thee the drive unit 104 is controlled. As a result, the shift shock caused by the gear-shift from the first gear stage to the second gear stage can be reduced. In particular, the reduction of the shift shock can easily be achieved by using the control of the first clutch member 130.

In the above embodiment, the case in which the drive unit 104 is connected to the output shaft A3 has been described. However, the drive unit 104 can be connected to the input shaft A2 instead of the output shaft A3 in the present invention.

In the above embodiment, the case in which the prescribed amount of the circulation torque Tc is calculated using each of the rotational speeds of the input shaft A2 and the output shaft A3, detected by the rotation speed sensor 105. However, in the present invention, the prescribed amount of the circulation torque Tc can be set (preset) in advance.

In the above embodiment, the case in which the output shaft A3 is provided with the power transmission mechanisms 101, 102, 103 has been described. However, mechanisms corresponding to the power transmission mechanism 101, 102, 103 can be provided to at least one of the input shaft A2 and the output shaft A3 in the present invention. Namely, the power transmission mechanisms of the present invention can be applied to an axis equipped with an idler gear.

In the above embodiment, the transmission for a vehicle in which gear-shift between the first-speed driven gear as first gear stage and the second-speed driven gear as second gear stage is carried out has been described as an example. However, the present invention can be applied to a transmission for a vehicle which shifts gears between at least two gear stages (a first gear stage and a second gear stage). In this case, the first gear stage and the second gear stage can be gear stages which are mutually contiguous, for example, a first gear stage and a second gear stage, or a third gear stage and a fourth gear stage. Alternatively, the two gear stages can be gear stages which are mutually discontinuous, for example, a first gear stage and a third gear stage, or a second gear stage and a fourth gear stage. The second gear stage can be a higher-speed gear stage than the first gear stage, or the first gear stage can be a higher-speed gear stage than the second gear stage.

## Claims

1. A transmission for a vehicle interposed in a power transmission system which connects a drive output shaft of a driving source of said vehicle and drive wheels of said vehicle, said transmission selectively realizing at least one of gear stages, and comprising:
an input shaft which forms a power transmission system between said drive output shaft and said input shaft;
an output shaft which forms a power transmission system between said drive wheels and said output shaft;
a power transmission mechanism, interposed between said input shaft and said output shaft for transmitting torque of said input shaft to said output shaft, which includes gear mechanisms, each corresponding to each of said gear stages;
a control device which controls said power transmission mechanism to selectively realize one of a first control mode, a second control mode, and a third control mode;
wherein said first control mode is a mode in which, when a first gear stage of said gear stages is selected, said power transmission mechanism transmits said torque of said input shaft to said output shaft via only a first gear mechanism corresponding to said first gear stage,
wherein said second control mode is a mode in which, when a second gear stage of said gear stages is selected, said power transmission mechanism transmits said torque of said input shaft to said output shaft via only a second gear mechanism corresponding to said second gear stage, and
wherein said third control mode is a mode in which, during a gear-shift from said first gear stage to said second gear stage, said power transmission mechanism circulates torque having a prescribed amount to said input shaft from said output shaft via said first gear mechanism while transmitting said torque of said input shaft to said output shaft via said second gear mechanism.

2. The transmission for a vehicle according to claim 1, wherein,
said power transmission mechanism comprises a drive unit which is connected to and rotates one of said input shaft and said output shaft;
said first gear mechanism includes a first fixed gear, a first idler gear, and a first clutch member, wherein
said first fixed gear is provided coaxially and relatively irrotatably to one of said input shaft and said output shaft,
said first idler gear is provided coaxially and relatively rotatably to the other of said input shaft and said output shaft, and is constantly meshed with said first fixed gear, and
said first clutch member is coaxially provided to said shaft to which said first idler gear is provided, and is movable in an axial direction of said shaft to which said first idler gear is provided between a non-engaged position where said first clutch member is disengaged with said first idler gear and an engaged position where said first clutch member is engaged with said first idler gear,
said second gear mechanism includes a second fixed gear, a second idler gear, and a second clutch member, wherein
said second fixed gear is provided coaxially and relatively irrotatably to one of said input shaft and said output shaft, to which said first fixed gear is provided,
said second idler gear is provided coaxially and relatively rotatably to one of said input shaft and said output shaft, to which said first idler gear is provided, and is constantly meshed with said second fixed gear, and
said second clutch member is coaxially provided to said shaft to which said first idler gear is provided, and is movable in said axial direction of said shaft to which said first idler gear is provided between a non-engaged position where said second clutch member is disengaged with said second idler gear and an engaged position where said second clutch member is engaged with said second idler gear,
said control device controls said first clutch member to be set at said engaged position thereof, and controls said second clutch member to be set at said non-engaged position thereof in said first control mode,
said control device controls said first clutch member to be set at said non-engaged position thereof, and controls said second clutch member to be set at said engaged position thereof in said second control mode, and
said control device controls both said first clutch member and said second clutch member so that said first clutch member is set at said engaged position thereof and said second clutch member is set at said engaged position thereof, and controls said drive unit so that said torque having said prescribed amount is circulated to said input shaft from said output shaft in said third control mode.

3. The transmission for a vehicle according to claim 1, wherein,
said first gear mechanism includes a first fixed gear, a first idler gear, and a first clutch member, wherein
said first fixed gear is provided coaxially and relatively irrotatably to one of said input shaft and said output shaft,
said first idler gear is provided coaxially and relatively rotatably to the other of said input shaft and said output shaft, and is constantly meshed with said first fixed gear, and
said first clutch member is coaxially provided to said shaft to which said first idler gear is provided, and is movable in an axial direction of said shaft to which said first idler gear is provided between a non-engaged position where said first clutch member is disengaged with said first idler gear and an engaged position where said first clutch member is engaged with said first idler gear,
said second gear mechanism includes a second fixed gear, a second idler gear, and a second clutch member, wherein
said second fixed gear is provided coaxially and relatively irrotatably to one of said input shaft and said output shaft, to which said first fixed gear is provided,
said second idler gear is provided coaxially and relatively rotatably to one of said input shaft and said output shaft, to which said first idler gear is provided, and is constantly meshed with said second fixed gear, and
said second clutch member is coaxially provided to said shaft to which said first idler gear is provided, and is movable in said axial direction of said shaft to which said first idler gear is provided between a non-engaged position where said second clutch member is disengaged with said second idler gear and an engaged position where said second clutch member is engaged with said second idler gear,
said control device controls said first clutch member to be set at said engaged position thereof, and controls said second clutch member to be set at said non-engaged position thereof in said first control mode,
said control device controls said first clutch member to be set at said non-engaged position thereof, and controls said second clutch member to be set at said engaged position thereof in said second control mode, and
said control device controls both said first clutch member and said second clutch member so that said first clutch member is set at said engaged position thereof and said second clutch member is set at said engaged position thereof, and thereafter, said control device controls a moving speed of said first clutch member when said first clutch member moves from said engaged position thereof to said non- engaged position thereof so that said torque having said prescribed amount is circulated from said output shaft to said input shaft, in said third control mode.

4. The transmission for a vehicle according to claim 2 or claim 3, wherein
said control device determines said prescribed amount of said torque based on a rotational speed of said output shaft and a rotational speed of said input shaft, and controls said drive unit or said first clutch member so as to circulate said torque having said prescribed amount to said input shaft from said output shaft in said third control mode.
